# DEMANDE DE BREVET EUROPEEN

(11) **EP 0 699 844 A1**
(43) Date de publication de la demande: **06.03.1996**
(21) Numéro de dépôt: 95401874.3
(22) Date de dépôt: 10.08.1995
(51) Int. Cl.: F16D 13/75, F16D 23/12

(54) **Dispositif de commande d'embrayage à rattrapage d'usure**

(30) Priorité: 30.08.1994 FR 9410418
(71) Demandeur: Société Anonyme dite: REGIE NATIONALE DES USINES RENAULT, F-92109 Boulogne Billancourt (FR)
(72) Inventeur: Fievet, Serge, F-78360 Montesson-La-Borde (FR); Prenel, Jean-Marc, F-78730 Saint-Arnoult-En-Yvelines (FR); Raoul, Michel, F-78990 Elancourt (FR)

(57) **Abrégé**

Dispositif de commande d'embrayage à friction muni d'éléments de friction pressés élastiquement les uns contre les autres par un diaphragme en position embrayée, comportant une fourchette (1a, 1b) qui est reliée par son extrémité supérieure (2a, 2b) à un câble de traction actionné par la pédale d'embrayage du véhicule, et prend appui contre une tête d'articulation (3) solidaire du carter (4) de l'embrayage pour repousser par son extrémité inférieure (5a, 5b) une butée (6a, 6b) de débrayage contre la partie centrale du diaphragme lorsque le conducteur appuie sur sa pédale de façon à écarter les éléments de friction, caractérisé en ce que le déplacement de la butée (6a, 6b) résultant de l'usure des éléments de friction est rattrapé au niveau de la tête d'articulation (3) de la fourchette (1a, 1b), afin de conserver à l'extrémité supérieure(2a, 2b) de la fourchette sensiblement la même trajectoire tout au long de la vie de l'embrayage.

## Description

La présente invention concerne un dispositif de commande d'embrayage mécanique par câble actionné à partir d'une pédale d'embrayage par l'utilisateur. Plus précisément, elle a pour objet un dispositif de commande d'embrayage à friction muni d'éléments de friction pressés élastiquement les uns contre les autres par un diaphragme en position embrayée, comportant une fourchette reliée par son extrémité supérieure à un câble de traction actionné par la pédale d'embrayage du véhicule, la dite fourchette prenant appui sur une tête d'articulation solidaire du carter de l'embrayage pour repousser par son extrémité inférieure une butée de débrayage contre la partie centrale du diaphragme lorsque le conducteur appuie sur sa pédale, de façon à écarter les éléments de friction.

Selon une disposition classique, illustrée notamment par la publication FR-2 571 868 au nom de la demanderesse, les moyens de rattrapage d'usure d'une commande mécanique d'embrayage peuvent être intégrés à la pédale d'embrayage. Conformément à cette publication, les moyens utilisés comportent notamment un organe de rappel de la pédale dans sa position de repos, une butée d'arrêt de la pédale dans cette position, un secteur à denture d'encliquetage pivotant autour d'un axe porté par la pédale, ainsi qu'un cliquet articulé sur la pédale. Lorsque la pédale est dans sa position de repos, le cliquet est écarté de la denture d'encliquetage par une butée de débrayage, tandis qu'il est abaissé en engagement avec la denture lorsque la pédale est dans une autre position, où elle transmet le mouvement au secteur.

Le fonctionnement d'un tel dispositif repose sur le fait que la tension du câble évolue avec l'usure des garnitures de friction de l'embrayage, modifiant ainsi la position initiale du secteur cranté par rapport au cliquet, si bien que celui-ci entre en contact avec une dent différente du secteur cranté lorsque la pédale est abaissée.

Bien qu'un tel système de rattrapage d'usure "à cliquet", monté sur la pédale d'embrayage soit considéré comme satisfaisant, et appliqué sur de nombreux véhicules, les utilisateurs ressentent généralement un accroissement de "l'effort à la pédale", autrement dit de la résistance de celle-ci, au cours de la vie de l'embrayage. Ce phénomène tient à ce que l'angle nécessaire au mouvement de la fourchette augmente sensiblement lors de l'usure des garnitures de friction, ce qui se traduit par un décalage des patins de la fourchette par rapport à l'axe de la butée, entraînant une perte d'axialité de celle-ci et, par voie de conséquence, un accroissement de l'effort à la pédale.

La présente invention vise à supprimer les inconvénients liés à l'augmentation du débattement angulaire de la fourchette lors de l'usure des garnitures de friction, inhérente aux systèmes de rattrapage d'usure sur le pédalier.

Elle concerne un dispositif de commande d'embrayage à friction muni d'éléments de friction pressés élastiquement les uns contre les autres par un diaphragme en position embrayée, comportant une fourchette qui est reliée par son extrémité supérieure à un câble de traction actionné par la pédale d'embrayage du véhicule, et prend appui contre une tête d'articulation solidaire du carter de l'embrayage pour repousser par son extrémité inférieure une butée de débrayage contre la partie centrale du diaphragme lorsque le conducteur appuie sur sa pédale, de façon à écarter les éléments de friction. Ce dispositif est caractérisé en ce que le déplacement de la butée résultant de l'usure des éléments de friction est rattrapé au niveau de la tête d'articulation de la fourchette, afin de conserver à l'extrémité supérieure de la fourchette sensiblement la même trajectoire tout au long de la vie de l'embrayage.

Selon un mode de réalisation de l'invention, l'axe d'articulation de la fourchette se déplace par rapport au carter de l'embrayage en fonction de l'état d'usure des éléments de friction.

Selon un mode de réalisation de l'invention, la tête d'articulation comporte un axe fixe par rapport au carter, sur lequel peut se déplacer un manchon solidaire de l'axe d'articulation de la fourchette.

Selon un mode de réalisation de l'invention, l'axe fixe est cranté et le manchon retient un élément cranté présentant une denture complémentaire à celle de l'axe pour assurer son immobilisation sur celui-ci.

Selon un mode de réalisation de l'invention, l'élément cranté supporte un doigt vertical reposant en position embrayée contre une rampe appartenant à la fourchette.

Selon un mode de réalisation de l'invention, la rampe de la fourchette repousse l'élément cranté à l'écart de l'axe fixe par l'intermédiaire du doigt vertical à la fin de chaque course d'embrayage.

Selon un mode de réalisation de l'invention, l'élément cranté se présente sous la forme d'un cadre rectangulaire engagé autour de l'axe fixe, et le doigt vertical est fixé sur son côté inférieur.

Selon un mode de réalisation de l'invention, le côté supérieur de l'élément cranté porte une lame de ressort en appui contre un épaulement intérieur du manchon.

Selon un mode de réalisation de l'invention, l'élément cranté et le manchon sont immobilisés sur les crans de l'axe fixe par le ressort de rappel dès que la fourchette n'est plus en appui contre le doigt vertical, si bien que l'axe d'articulation de la fourchette conserve pendant le débrayage la position qu'il a atteint lors de l'embrayage précédent.

Selon un mode de réalisation de l'invention, l'axe d'articulation de la fourchette est constitué de deux demi-axes fixés sur les côtés verticaux de l'élément cranté.

La présente invention sera mieux comprise à la lecture de la description suivante d'un mode de réalisation particulière de celle-ci, en liaison avec les dessins annexés sur lesquels :
- les figures 1A et 1B illustrent la situation d'un dispositif de commande conforme à l'invention, lorsque les garnitures de friction sont à l'état neuf,
- les figures 1C et 1D illustrent la situation du même dispositif de commande lorsque l'embrayage est usé,
- la figure 2A est une vue selon F de ce dispositif,
- la figure 2B est un agrandissement partiel de la figure 2A, et
- les figures 3A et 3B sont deux agrandissements partiels des figures 1A ou 1B, et 1C ou 1D.

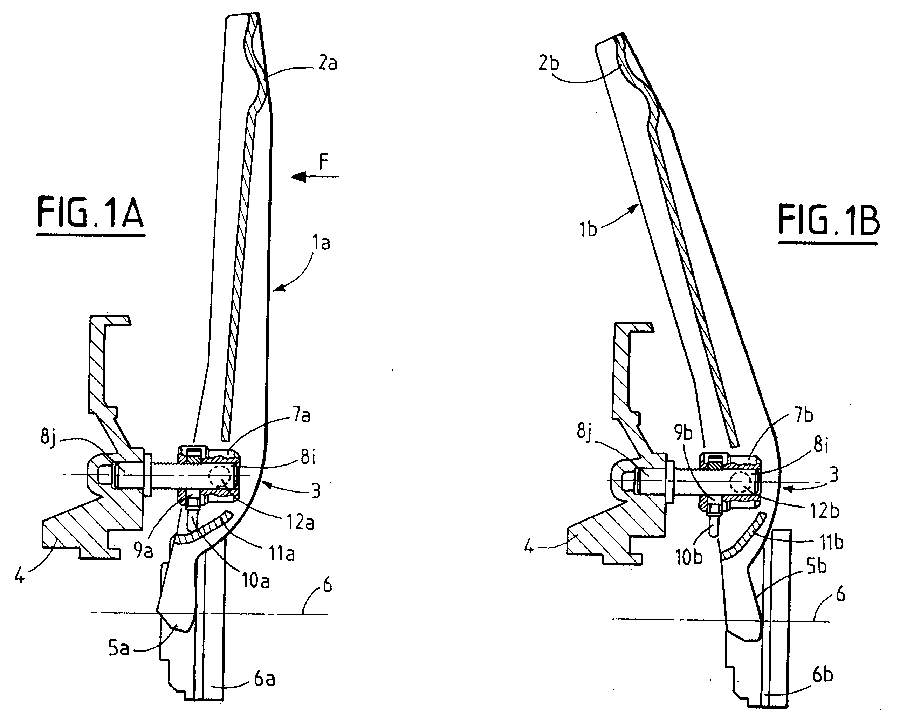

Les figures 1A à 1D correspondent à une coupe verticale d'un dispositif de commande d'embrayage conforme à l'invention, passant par l'axe 6 de la butée d'embrayage 6a, 6b. Ce dispositif comporte une fourchette 1a, 1b, dont l'extrémité supérieure 2a, 2b est reliée à l'extrémité d'un câble d'embrayage, non représenté. De façon classique la fourchette 1a, 1b est actionnée par l'utilisateur à partir de sa pédale d'embrayage, par l'intermédiaire d'un câble fixé à celle-ci.

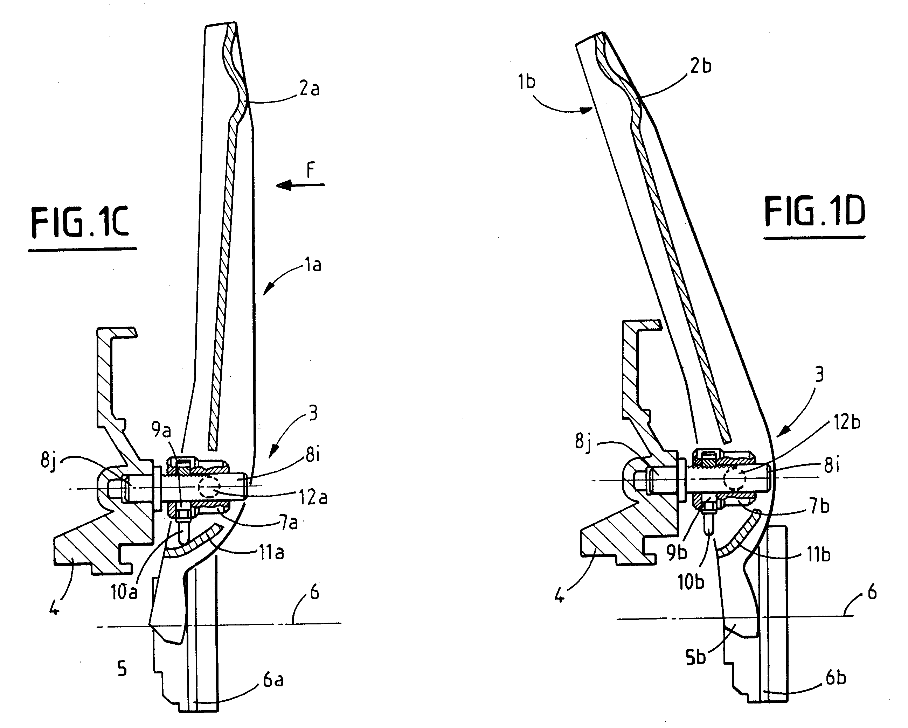

La fourchette 1a, 1b pivote autour d'une tête d'articulation 3 solidaire d'un élément fixe 4 du carter d'embrayage sous la traction du câble d'embrayage entre une position embrayée, la (figures 1A et 1C) et une position débrayée, 1b (figures 1B et 1D) en repoussant par sa partie inférieure 5a, 5b la butée de débrayage cylindrique 6a, 6b vers la droite des schémas. Dans sa position débrayée 6b, la butée repousse élastiquement la partie centrale d'un diaphragme (non représenté) de façon à débrayer la transmission du véhicule en dégageant du volant moteur les garnitures de friction de l'embrayage.

Sur ces figures, on voit par ailleurs que la tête d'articulation 3 sur laquelle est montée la fourchette 1a, 1b, comporte un manchon cylindrique 7a, 7b engagé sur la première extrémité 8i d'un axe fixe 8 lui-même engagé par son autre extrémité 8j dans l'élément de carter 4, et cranté sur une partie de sa longueur. Le manchon 7a, 7b retient sur la partie crantée de l'axe 8 un élément de support cranté 9a, 9b, sur lequel est fixé un doigt vertical 10a, 10b, en appui contre une rampe 11a, appartenant à la fourchette la en position embrayée, (figures 1A et 1C) et dégagé de cette rampe 11b, en position débrayée (figures 1B, 1D).

En comparant les figures 1A et 1B aux figures 1C et 1D, on voit que le manchon 7a, 7b, l'élément cranté 9a, 9b, et le doigt vertical 10a, 10b sont déportés de la droite vers la gauche entre les premières et les secondes. De façon classique l'usure des éléments de friction de l'embrayage se traduit par un déplacement de la butée à l'écart du diaphragme, soit vers la gauche des schémas. Conformément à l'invention, cette usure se traduit également par un déplacement du support cranté, 9a, 9b, du manchon 7a, 7b, et de l'axe d'articulation 12a, 12b (dont l'emplacement le long de l'axe fixe 8 est indiqué en traits interrompus) le long de l'axe fixe 8, dans la même direction que la butée.

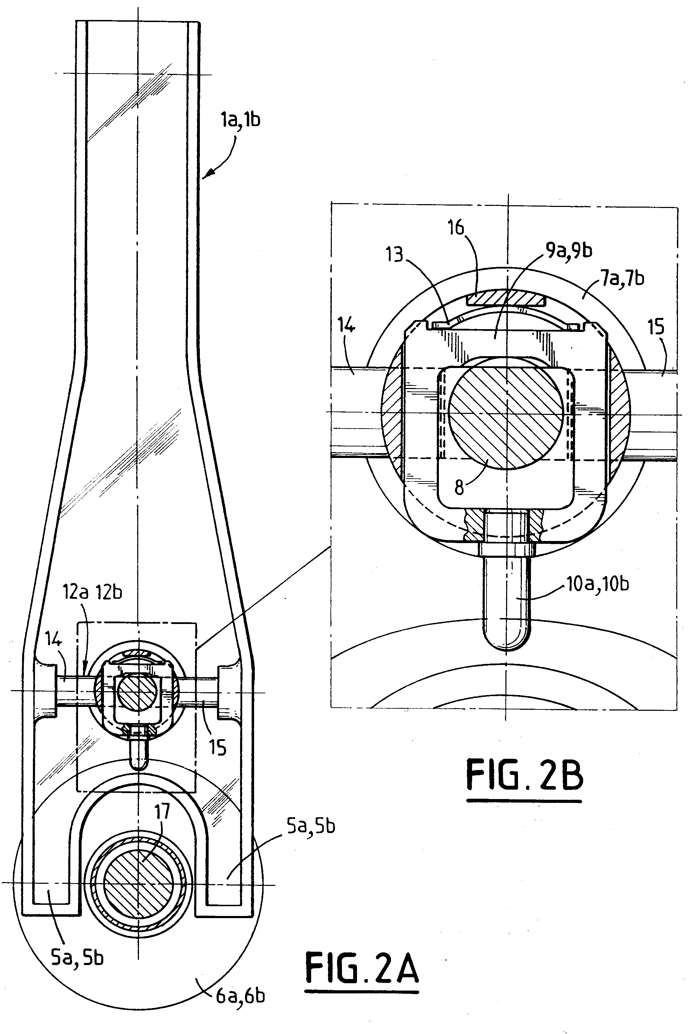

Sur la figure 2A, la fourchette 1a, 1b est représentée de face, (cf flèche F de la figure 1A). Cette figure fait apparaître les deux patins 5a, 5b, constituant la partie inférieure de la fourchette 1a, 1b, en appui contre la butée de débrayage 6a, 6b. Au centre de la butée 6a, 6b, apparaît en coupe l'arbre d'embrayage 17 sur lequel celle-ci est engagée. La figure 2A met en évidence la disposition exacte de l'axe d'articulation 12a, 12b de la fourchette vis-à-vis du support 9a, 9b, de la forme d'un cadre rectangulaire engagé autour de l'axe fixe 8. L'axe d'articulation 12a, 12b est en réalité constitué de deux demi-axes 14, 15, fixés de part et d'autre des côtés verticaux, tandis que le doigt 10 est fixé sur le côté inférieur de l'élément 9a, 9b. L'axe d'articulation 12a, 12b ne traverse donc pas l'axe cranté 8, mais est fixé sur le manchon 7a, 7b, ce qui permet à la fourchette 1a, 1b de se déplacer le long de l'axe 8 entre les figures 1A, 1B et 1C, 1D.

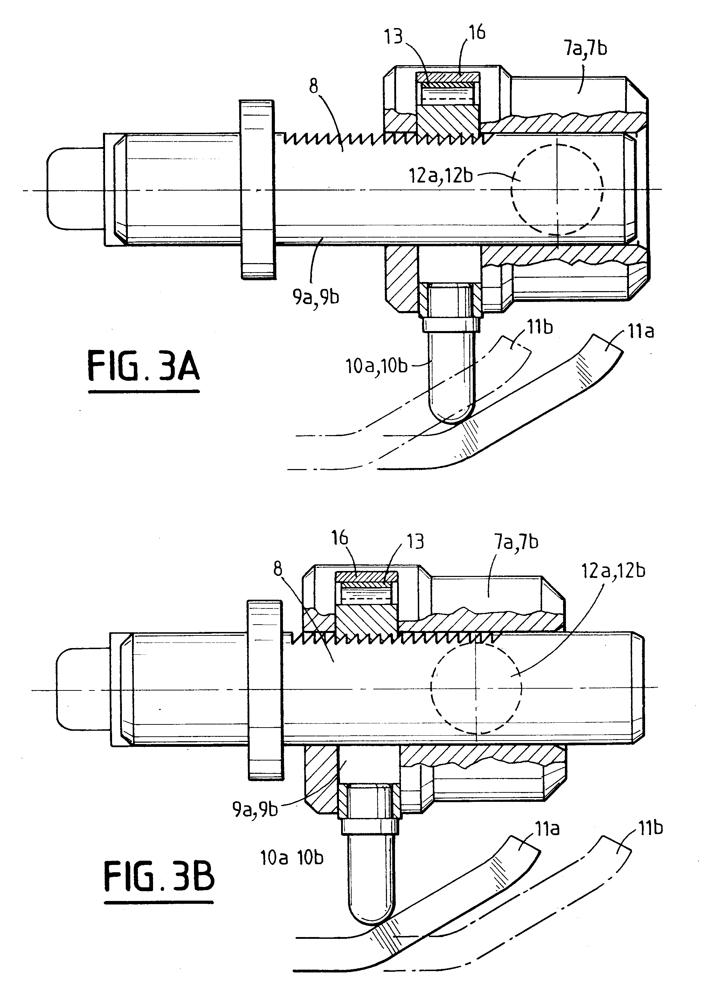

Les agrandissements des figures 2B, 3A et 3B mettent en évidence que l'élément de support 9a, 9b, présentant une denture complémentaire à celle-ci, est engagé sur la partie crantée de l'axe 8 sous l'action élastique d'une lame de ressort incurvée 13, fixée par ses deux extrémités sur cet élément 9a, 9b, et en appui par sa partie centrale contre un épaulement intérieur 16 du manchon 7a, 7b,. Enfin sur les figures 3A et 3B correspondant respectivement aux figures 1A, 1B et 1C, 1D, on a fait apparaître la rampe de la fourchette, 11a, 11b, qui est en appui contre le doigt vertical 10a, 10b, en position embrayée, et écartée de celui-ci en position débrayée.

Comme indiqué précédemment, la commande du débrayage est assurée, de façon classique, grâce au pivotement de la fourchette 1a, 1b vis-à-vis de la tête 3 autour de son axe d'articulation 12a, 12b, de façon à repousser la butée 6a, 6b, à l'encontre du diaphragme de l'embrayage. En revanche, le rattrapage d'usure de l'embrayage est assuré de façon spécifique, au niveau de la tête d'articulation 3. Celle-ci se déplace en effet sur l'axe cranté 8 en fonction de l'usure de l'embrayage, de la façon suivante. En fin de course d'embrayage, l'appui de la rampe 11a contre le doigt 10a dégage le support 9a de l'axe cranté 8 vers le haut. Le manchon 7a et la fourchette la, solidaire en translation de celui- par son axe d'articulation 12a peuvent alors se déplacer sur l'axe cranté 8 jusqu'à une position déterminée par l'état des garnitures de friction, et imposée par l'intermédiaire de la butée 6a. Lors du débrayage suivant, le support 9b retombe sur l'axe cranté 8 sous l'action du ressort 13, dès que la fourchette 1b s'écarte du doigt 10b. La fourchette étant en permanence sollicitée en direction de l'élément de carter 4 par la réaction de la butée 6a, 6b sur son extrémité inférieure 5a, 5b, le support 9a est repoussé régulièrement sur l'axe 8 avec la fourchette la, lors de chaque embrayage et il retombe sur les crans de l'axe 8 dans une position qui est déterminée par l'état d'usure des garnitures de friction. Cette position est conservée lors du débrayage suivant et jusqu'à ce que le support 9a soit placé en face des crans voisins.

Grâce à l'invention, la position de l'axe d'articulation évolue en fonction de celle de la butée tout au long de la vie de l'embrayage. En se référant aux figures 1A à 1D, on voit que le déplacement de l'axe d'articulation 12a, 12b de la fourchette 1a, 1b se traduit par un déplacement de son extrémité supérieure 2a, 2b, (comportant le point d'accrochage du câble) dans le même sens. Ce déplacement exerce une traction sur le câble, qui permet de compenser le relâchement entraîné par le déport de la butée, résultant de l'usure des garnitures de friction.

En conclusion, il faut souligner que le dispositif de commande proposé permet de faire reculer le point d'articulation de la fourchette "cran par cran" jusqu'à l'usure complète de la garniture de friction de l'embrayage. En disposant un crantage suffisamment précis sur l'axe fixe de la tête d'articulation, et en donnant à la rampe d'appui du doigt vertical sur la fourchette une forme appropriée, il est en effet possible de conserver à l'extrémité supérieure de la fourchette une même position tout au long de la vie de l'embrayage, donc de rendre inutile tout réglage du câble d'embrayage au niveau du pédalier.

## Revendications

**1)** Dispositif de commande d'embrayage à friction muni d'éléments de friction pressés élastiquement les uns contre les autres par un diaphragme en position embrayée, comportant une fourchette (1a, 1b) qui est reliée par son extrémité supérieure (2a, 2b) à un câble de traction actionné par la pédale d'embrayage du véhicule, et prend appui contre une tête d'articulation (3) solidaire du carter (4) de l'embrayage pour repousser par son extrémité inférieure (5a, 5b) une butée (6a, 6b) de débrayage contre la partie centrale du diaphragme lorsque le conducteur appuie sur sa pédale de façon à écarter les éléments de friction, caractérisé en ce que le déplacement de la butée (6a, 6b) résultant de l'usure des éléments de friction est rattrapé au niveau de la tête d'articulation (3) de la fourchette (1a, 1b), afin de conserver à l'extrémité supérieure(2a, 2b) de la fourchette sensiblement la même trajectoire tout au long de la vie de l'embrayage.

**2)** Dispositif de commande d'embrayage selon la revendication 1, caractérisé en ce que, l'axe d'articulation (12a, 12b) de la fourchette se déplace par rapport au carter (4) de l'embrayage en fonction de l'état d'usure des éléments de friction.

**3)** Dispositif de commande d'embrayage selon la revendication 2, caractérisé en ce que la tête d'articulation (3) comporte un axe fixe (8) par rapport au carter (4) sur lequel peut se déplacer un manchon (7a, 7b) solidaire de l'axe d'articulation (12a, 12b) de la fourchette (1a, 1b).

**4)** Dispositif de commande d'embrayage selon la revendication 3, caractérisé en ce que l'axe fixe (8) est cranté et en ce que le manchon(7a, 7b) retient un élément cranté (9a, 9b) présentant une denture complémentaire à celle de l'axe (8), pour assurer son immobilisation sur celui-ci.

**5)** Dispositif de commande d'embrayage selon la revendication 4, caractérisé en ce que l'élément cranté (9a, 9b) supporte un doigt vertical (10a, 10b) reposant en position embrayée contre une rampe (11a, 11b) appartenant à la fourchette (1a, 1b).

**6)** Dispositif de commande d'embrayage selon la revendication 5, caractérisé en ce que la rampe (11a, 11b) de la fourchette (1a, 1b) repousse l'élément cranté (9a, 9b) à l'écart de l'axe fixe (8) par l'intermédiaire du doigt vertical (10a, 10b) à la fin de chaque course d'embrayage.

**7)** Dispositif de commande d'embrayage selon la revendication 6, caractérisé en ce que l'élément cranté (9a, 9b) se présente sous la forme d'un cadre rectangulaire engagé autour de l'axe fixe (8), et en ce que le doigt vertical (10a, 10b) est fixé sur son côté inférieur.

**8)** Dispositif de commande d'embrayage selon la revendication 7, caractérisé en ce que le côté supérieur de l'élément cranté (9a, 9b) porte une lame de ressort (13) en appui contre un épaulement intérieur (16) du manchon (7a, 7b).

**9)** Dispositif de commande d'embrayage selon la revendication 8, caractérisé en ce que l'élément cranté (9a, 9b) et le manchon (7a, 7b) sont immobilisés sur les crans de l'axe fixe (8) par le ressort de rappel (13) dès que la fourchette (1a, 1b) n'est plus en appui contre le doigt vertical (10a, 10b), si bien que l'axe d'articulation (12a, 12b) de la fourchette conserve pendant le débrayage la position qu'il a atteint lors de l'embrayage précédent.

**10)** Dispositif de commande d'embrayage selon l'une des revendications 7, 8 ou 9, caractérisé en ce que l'axe d'articulation (12a, 12b) de la fourchette est constitué de deux demi-axes (14, 15) fixés sur les côtés verticaux de l'élément cranté (9a, 9b).
